# EUROPÄISCHE PATENTANMELDUNG

(11) **EP 3 859 958 A1**
(43) Veröffentlichungstag der Anmeldung: **04.08.2021**
(21) Anmeldenummer: 21150350.3
(22) Anmeldetag: 06.01.2021
(51) Int. Cl.: H02M 1/32, H02H 9/04, H02M 1/44, H02M 1/12, H02M 7/06

(54) **SCHALTNETZTEIL MIT SPANNUNGSBEGRENZUNG**

(30) Priorität: 28.01.2020 DE 102020201006
(71) Anmelder: Siemens Aktiengesellschaft, 80333 München (DE)
(72) Erfinder: Braun, Carsten, 13599 Berlin (DE); Braune, Jörg, 13507 Berlin (DE)

(57) **Zusammenfassung**

Die Erfindung betrifft ein Schaltnetzteil (10) mit einer Gleichrichtereinrichtung (13), einer der Gleichrichtereinrichtung (13) nachgeordneten Schalteinheit (14), einer der Schalteinheit (14) nachgeordneten Übertragungseinrichtung (15) und einer Filtereinrichtung (12).

Um die Empfindlichkeit des Schaltnetzteils (10) gegenüber energiereichen Störungen zu verringern, wird vorgeschlagen, dass die Filtereinrichtung (12) eine stromkompensierte Drossel-spule (L1) umfasst, die derart mit einer Spannungsbegrenzer-schaltung (20) verschaltet ist, dass bei an der Drosselspule (L1) anliegenden Störsignalen eine Dämpfung der Störsignale durch die Spannungsbegrenzerschaltung (20) erfolgt.

## Beschreibung

Die Erfindung betrifft ein Schaltnetzteil mit einer Gleichrichtereinrichtung, einer der Gleichrichtereinrichtung nachgeordneten Schalteinheit, einer der Schalteinheit nachgeordneten Übertragungseinrichtung und mit einer Filtereinrichtung.

Schaltnetzteile werden in vielfältiger Weise zur Energieversorgung elektrischer Geräte eingesetzt. Beispielsweise werden sie bei elektrischen Automatisierungsgeräten verwendet, um elektrische Energie auf einem für die Automatisierungsgeräte geeigneten Spannungslevel zur Verfügung zu stellen.

Ein Schaltnetzteil der eingangs genannten Art ist beispielsweise aus der DE 10 2014 213 068 A1 bekannt.

In Schaltnetzteilen werden Filtereinrichtungen eingesetzt, um in das Netzteil hinein- und aus dem Netzteil herauswirkende Störungen zu unterdrücken. Aus dem Schaltnetzteil in das Stromnetz herauswirkende Störungen werden oft auch als Funkstörspannungen bezeichnet. Bei besonders energiereichen Störungen, wie sie beispielsweise im IEC-Standard IEC 61000 als "Surge" oder "Ringwave" bezeichnet werden, kann es bei Anlegen als Common Mode Störung vorkommen, dass hinter der Filtereinrichtung eine Spannungsüberhöhung auftritt, die das Doppelte der Eingangsspannung des Schaltnetzteils beträgt. Diese Überhöhung kann zu einem Funkenüberschlag im Schaltnetzteil gegen Erdpotential führen.

Üblicherweise begegnet man dieser Problemstellung damit, dass die Schaltnetzteile mit geringeren Störpegeln beaufschlagt werden oder hinsichtlich des Schaltungslayouts größere Abstände zum Gehäuse eingehalten werden.

Ausgehend von einem Schaltnetzteil der eingangs genannten Art liegt der Erfindung die Aufgabe zugrunde, die Empfindlichkeit des Schaltnetzteils gegenüber energiereichen Störungen zu verringern.

Diese Aufgabe wird durch die Merkmale des Anspruchs 1 gelöst. Konkret ist vorgesehen, dass die Filtereinrichtung eine stromkompensierte Drosselspule umfasst, die derart mit einer Spannungsbegrenzerschaltung verschaltet ist, dass bei an der Drosselspule anliegenden Störsignalen eine Dämpfung der Störungen durch die Spannungsbegrenzerschaltung erfolgt.

Auf diese Weise kann erreicht werden, dass mit einem geringen schaltungstechnischen Aufwand eine hohe Dämpfung von energiereichen Störungen erfolgt und eine Weiterleitung äußerer Störungen ins Schaltnetzteil bzw. eine Auskopplung von internen Störungen ins Stromnetz (Funkstörspannungen) verhindert wird.

Gemäß einer vorteilhaften Ausführungsform des erfindungsgemäßen Schaltnetzteils kann vorgesehen sein, dass die Spannungsbegrenzerschaltung einen Überspannungsableiter und einen elektrischen Widerstand, vorzugsweise einen Varistor, umfasst.

Bei dem Überspannungsableiter kann es sich beispielsweise um eine Gasentladungsröhre mit definierter Zündspannung handeln. Dieses Bauteil hat den Vorteil einer sehr geringen Koppelkapazität im Bereich von wenigen pF. Die minimale Zündspannung des Überspannungsableiters muss hierbei unter der maximalen Eingangsspannung der Schaltung liegen, da sonst der Ableiter zünden würde. Der Varistor dient zur Bedämpfung der Störimpulse. Alternativ könnte auch ein ohmscher Widerstand eingesetzt werden.

Konkret kann in diesem Zusammenhang vorgesehen sein, dass der Überspannungsableiter und der Varistor in Reihe geschaltet sind.

Eine weitere vorteilhafte Ausführungsform sieht in diesem Zusammenhang vor, dass der Überspannungsableiter eingangsseitig an einen mit einem ersten Leiter verbundenen Eingang der Drosselspule angeschlossen ist und der Varistor ausgangsseitig an einen mit einem zweiten Leiter verbundenen Ausgang der Drosselspule angeschlossen ist.

Hierdurch wird über der stromkompensierten Drosselspule eine spannungsabhängige Spannungsbegrenzerschaltung in Form der Reihenschaltung aus dem Überspannungsableiter und dem Varistor bereitgestellt. Entsteht bei energiereicher Störbeaufschlagung gegen Erdpotential eine ausreichende Potentialdifferenz über der stromkompensierten Drosselspule zündet der Überspannungsableiter und die Schwingung wird über den Varistor gedämpft. Während eines Normalbetriebs, bei dem keine Beaufschlagung der Schaltung mit Störungen (z.B. "Surge" oder "Ringwave") erfolgt, ist die Spannungsbegrenzerschaltung sehr hochohmig und stellt keinen parallelen Pfad dar, über den Störsignale als Funkstörspannung das Schaltnetzteil in Richtung Stromnetz verlassen könnten.

Besonders hervorzuheben ist hierbei, dass erfindungsgemäß mit einer einzigen einen Überspannungsableiter umfassenden Spannungsbegrenzerschaltung, die quasi "diagonal" über die Drosselspule geschaltet ist, ein Schutz vor Störungen erreicht wird. Durch ihre Verschaltung schützt sie z.B. vor Surge- und Ringwave-Störpulsen sowohl im Differentialmode (zwischen den Leitern L und N) und im Common Mode zwischen dem Leiterpaar LN und Erdpotential. Bei kleinem Raum im Gehäuse des Schaltnetzteils und geforderten hohen ISO Abständen bietet die Erfindung einen signifikanten Vorteil zum Schutz gegen Störungen. Gleichzeitig werden nur wenige zusätzliche Bauteile benötigt.

Gemäß einer weiteren vorteilhaften Ausführungsform des erfindungsgemäßen Schaltnetzteils ist vorgesehen, dass die Filtereinrichtung der Drosselspule vor- und/oder nachgeschaltete Kondensatoren umfasst.

Hierdurch kann einerseits eine Glättung des Stroms erfolgen. Andererseits werden Spannungsspitzen weiter abgefangen. Außerdem kann durch geeignete Auslegung der Kondensatoren erreicht werden, dass die Spannungsfestigkeit der einzelnen Bauteile nicht überschritten wird.

Schließlich kann gemäß einer weiteren vorteilhaften Ausführungsform des erfindungsgemäßen Schaltnetzteils vorgesehen sein, dass die Filtereinrichtung der Gleichrichtereinrichtung vorgeschaltet ist.

Auf diese Weise kann der Gleichrichter direkt mit einer störfreien Spannung arbeiten.

Die Erfindung wird nachfolgend anhand eines Ausführungsbeispiels näher erläutert. Die spezifische Ausgestaltung des Ausführungsbeispiels ist für die allgemeine Ausgestaltung des erfindungsgemäßen Schaltnetzteils in keiner Weise einschränkend zu verstehen, vielmehr können einzelne Ausgestaltungsmerkmale des Ausführungsbeispiels in beliebiger Weise frei untereinander und mit den voranstehend beschriebenen Merkmalen kombiniert werden.

Hierzu zeigen
- Figur 1: eine schematische Ansicht des prinzipiellen Aufbaus eines Schaltnetzteils, und
- Figur 2: ein Ausführungsbeispiel einer Schaltungsanordnung für eine Filtereinrichtung mit integrierter Spannungsbegrenzerschaltung.

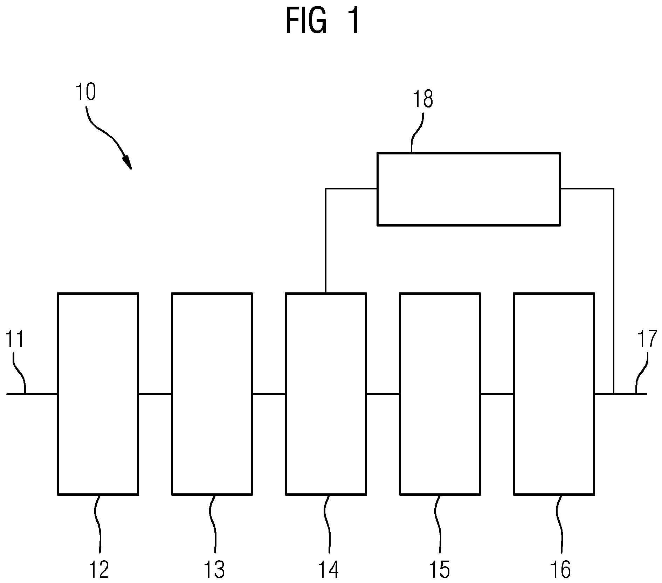

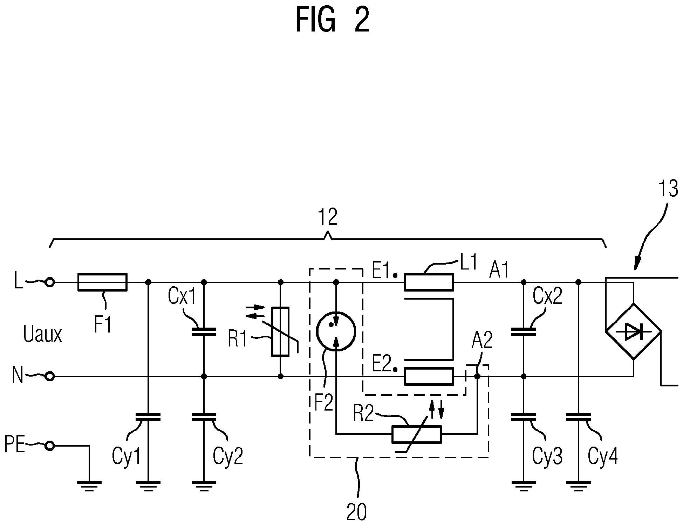

Figur 1 zeigt in schematischer Darstellung ein Schaltnetzteil 10 mit seinen wesentlichen funktionellen Komponenten. Einem Eingang 11, über den dem Schaltnetzteil ein Wechselspannungssignal zugeführt wird, ist eine Filtereinrichtung 12 nachgeordnet, die eine Anpassung des Spannungssignals und eine Unterdrückung von Störsignalen vornimmt. Die genaue Funktionsweise der Filtereinrichtung 12 wird später im Zusammenhang mit Figur 2 detaillierter erläutert. Der Filtereinrichtung 12 ist eine Gleichrichtereinrichtung 13 nachgeordnet, die eine Gleichrichtung des eingangsseitig anliegenden gefilterten Wechselspannungssignals vornimmt. Dazu umfasst die Gleichrichtereinrichtung 13 üblicherweise eine Zusammenschaltung mehrerer Dioden.

Der Gleichrichtereinrichtung 13 ist eine Schalteinheit 14 nachgeordnet, die das gleichgerichtete Spannungssignal in Impulse mit vergleichsweise hoher Frequenz, z.B. im Kilohertzbereich, schaltet und ihr Ausgangssignal dem Eingang einer Übertragungseinrichtung 15, beispielsweise einem Transformator, zuführt, der das Signal auf eine gewünschte Spannungsebene transformiert.

Nach Transformation mittels der Übertragungseinrichtung 15 wird das abgegebene Signal einem Ausgangsfilter 16 zugeführt, das eine Glättung des Signals vornimmt, bevor es auf dem gewünschten Spannungsniveau an einem Ausgang 17 des Schaltnetzteils 10 abgegeben wird.

Mittels einer Regeleinrichtung 18 wird die Schalteinheit 14 in Abhängigkeit vom Ausgangssignal angesteuert.

Da eingangsseitig am Schaltnetzteil 10 anliegende energiereiche Störsignale, z.B. sogenannte "Surge" und/oder "Ringwave" Signale, Effekte erzeugen können, die zu gefährlichen Überspannungen am Ausgang der Filtereinrichtung 12 führen können und letztlich Funkenüberschläge gegenüber Erdpotential innerhalb des Schaltnetzteils 10 hervorrufen können, muss eine Dämpfung solcher Störsignale sichergestellt sein. Außerdem muss verhindert werden, dass Störsignale eingangsseitig aus dem Schaltnetzteil 10 ins Stromnetz eingekoppelt werden.

Zu diesem Zweck wird die Filtereinrichtung 12 wie nachfolgend anhand von Figur 2 erläutert ausgebildet.

Figur 2 zeigt hierzu ein beispielhaftes Schaltbild der Filtereinrichtung 12.

Eingangsseitig wird der Filtereinrichtung 12 über Leiter L und N ein Spannungssignal Uₐᵤₓ zugeführt. Das Gehäuse des Schaltnetzteils liegt auf Erdpotential PE.

Das Spannungssignal wird über eine Sicherung F1 und eine Kondensatorschaltung (Cx1, Cy1, Cy2) einem in Parallelschaltung angeordneten Varistor R1 zugeführt, dem Eingänge E1 und E2 einer stromkompensierten Drosselspule L1 nachgeordnet ist. An Ausgängen A1, A2 der stromkompensierten Drosselspule L1 ist erneut eine Kondensatorschaltung (Cx2, Cy3, Cy4) angeschlossen. Ausgangsseitig ist an die Filtereinrichtung 12 die Gleichrichtereinrichtung 13 angeschlossen.

Zur Unterdrückung von Störsignalen weist die Filtereinrichtung 12 eine Spannungsbegrenzerschaltung 20 auf, die in Figur 2 durch einen gestrichelten Rahmen angedeutet ist. Die Spannungsbegrenzerschaltung 20 ist an die stromkompensierte Drosselspule L1 angeschlossen. Die Spannungsbegrenzerschaltung 20 besteht hierbei aus einer Reihenschaltung eines Überspannungsableiters F2 und eines Varistors R2.

Entsteht bei Anliegen eines energiereichen Störsignals gegen erdpotential eine Potentialdifferenz über der stromkompensierten Drosselspule L1, zündet der Überspannungsableiter F2 und die Schwingung des Störsignals wird mit dem Varistor R2 gedämpft. Während Normalbetrieb (keine Beaufschlagung mit Störsignalen) ist die Spannungsbegrenzerschaltung sehr hochohmig und stellt keinen parallelen Pfad dar, über den Störsignale (Funkstörspannungen) das Schaltnetzteil verlassen könnten.

Die Spannungsbegrenzerschaltung 20 ist hierbei so ausgelegt und mit der stromkompensierten Drosselspule verschaltet, dass die unter Störbeeinflussung entstehende Überspannung bedämpft wird. Unter Normalbetrieb (keine Störungen von außen) ist die Schaltung hingegen hochohmig. Etwaige entstehende Funkstörspannungen gelangen damit nicht nach außen an den Eingang des Schaltnetzteils.

Die Spannungsbegrenzerschaltung 20 besteht hierfür aus zwei Elementen: Der Überspannungsableiter F2 dient als Schaltelement. lm nicht geschalteten Zustand ist er sehr hochohmig (im Bereich von GΩ). Entsteht eine Spannungsdifferenz über der Drosselspule L1, schaltet er sehr schnell durch (Schaltzeit in Bereich von Nanosekunden). Das zweite Element ist der Varistor R2, der in Reihe hinter den Überspannungsableiter F2 geschaltet ist. Er dämpft bei durchgeschaltetem Überspannungsableiter die Schwingung des Störsignals. Die Spannungsbegrenzerschaltung 20 ist quasi diagonal über die stromkompensierte Drosselspule L1 geschaltet, das bedeutet, von einem Eingang E1 in einem ersten Leiter L zu einem Ausgang A2 in dem zweiten Leiter N. Alternativ könnte auch eine Verdrahtung zwischen Eingang E2 und Ausgang A1 stattfinden, da die Eingänge E1, E2 und die Ausgänge A1, A2 mit jeweils einem X-Kondensator für die Störimpulse kurzgeschlossen sind. Überschwinger hinter der stromkompensierten Drosselspule L1, die auf energiereiche Störungen an den Leitern L und N zurückgehen, werden damit bedämpft.

Obwohl die Erfindung vorstehend im Detail durch bevorzugte Ausführungsbeispiele näher illustriert und beschrieben worden ist, ist die Erfindung nicht durch die offenbarten Beispiele eingeschränkt und andere Variationen können vom Fachmann hieraus abgeleitet werden, ohne den Schutzumfang der nachfolgenden Patentansprüche zu verlassen.

## Patentansprüche

1. Schaltnetzteil (10) mit
- einer Gleichrichtereinrichtung (13);
- einer der Gleichrichtereinrichtung (13) nachgeordneten Schalteinheit (14);
- einer der Schalteinheit (14) nachgeordneten Übertragungseinrichtung (15); und
- einer Filtereinrichtung (12);
**dadurch gekennzeichnet, dass**
- die Filtereinrichtung (12) eine stromkompensierte Drosselspule (L1) umfasst, die derart mit einer Spannungsbegrenzerschaltung (20) verschaltet ist, dass bei an der Drosselspule (L1) anliegenden Störsignalen eine Dämpfung der Störsignale durch die Spannungsbegrenzerschaltung (20) erfolgt.

2. Schaltnetzteil (10) nach Anspruch 1,
**dadurch gekennzeichnet, dass**
- die Spannungsbegrenzerschaltung (20) einen Überspannungsableiter (F2) und einen elektrischen Widerstand, vorzugsweise einen Varistor (R2), umfasst.

3. Schaltnetzteil (10) nach Anspruch 2,
**dadurch gekennzeichnet, dass**
- der Überspannungsableiter (F2) und der Varistor (R2) in Reihe geschaltet sind.

4. Schaltnetzteil (10) nach Anspruch 3,
**dadurch gekennzeichnet, dass**
- der Überspannungsableiter (F2) eingangsseitig an einen mit einem ersten Leiter (L) verbundenen Eingang (E1) der Drosselspule (L1) angeschlossen ist und der Varistor (R2) ausgangsseitig an einen mit einem zweiten Leiter (N) verbundenen Ausgang (A2) der Drosselspule (L1) angeschlossen ist.

5. Schaltnetzteil (10) nach einem der vorangehenden Ansprüche,
**dadurch gekennzeichnet, dass**
- die Filtereinrichtung (12) der Drosselspule (L1) vor- und/oder nachgeschaltete Kondensatoren (Cx1, Cy1, Cy2, Cx2, Cy3, Cy4) umfasst.

6. Schaltnetzteil (10) nach einem der vorangehenden Ansprüche,
**dadurch gekennzeichnet, dass**
- die Filtereinrichtung (12) der Gleichrichtereinrichtung (13) vorgeschaltet ist.
